Europäisches Patentamt

European Patent Office

Office européen des brevets

(11) Numéro de publication: **0 328 840 B1**

## FASCICULE DE BREVET EUROPEEN

(45) Date de publication de fascicule du brevet: **02.06.93** (51) Int. Cl.⁵: **B60G 21/06**, B60G 17/02

(21) Numéro de dépôt: **88403380.4**

(22) Date de dépôt: **30.12.88**

(54) **Dispositif de suspension hydropneumatique semi-active et véhicule automobile équipé de ce dispositif.**

(30) Priorité: **12.01.88 FR 8800276**

(43) Date de publication de la demande:
**23.08.89 Bulletin 89/34**

(45) Mention de la délivrance du brevet:
**02.06.93 Bulletin 93/22**

(84) Etats contractants désignés:
**DE GB IT**

(56) Documents cités:
EP-A- 0 035 330         EP-A- 0 289 364
DE-A- 1 580 316         FR-A- 1 256 864
FR-A- 1 535 641         FR-A- 2 080 095
FR-A- 2 208 800         FR-E- 67 446
FR-E- 68 500            GB-A- 1 488 254
US-A- 3 356 954

DESIGN ENGINEERING, mai 1979, pages
59-65, New York, US; "Fluid power, its place
in car design"

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **Lachaize, Henri**
**13 Avenue Paul Langevin**
**F-92230 Fontenay-aux-Roses(FR)**

(74) Mandataire: **Beauchamps, Georges et al**
**Cabinet Z.Weinstein 20, avenue de Friedland**
**F-75008 Paris (FR)**

# Description

La présente invention a essentiellement pour objet un dispositif de suspension hydropneumatique semi-active pour véhicule automobile.

Elle vise également un véhicule d'un type quelconque équipé de ce dispositif.

On connait déjà des suspensions hydropneumatiques semi-actives qui ne réagissent essieu par essieu pratiquement que pour les variations lentes de charge.

On connait également d'après FR-A-1 256 864 une suspension dont les vérins d'un même essieu comportent des chambres annulaires reliées de façon croisée aux accumulateurs de cet essieu.

Le document EP-A-035 330 dècrit quant à lui, une suspension semi-active à correcteurs de hauteur, mais où la correction de hauteur de la quatrième roue est conditionnée par un système électronique de contrôle.

Pour sa part, le document FR-E-68 500 décrit un dispositif de suspension hydropneumatique semi-active pour véhicule automobile, et du type comprenant un vérin hydraulique associé à chacune des roues et muni d'une chambre principale reliée par l'intermédiaire d'un amortisseur à un accumulateur hydropneumatique principal, ainsi qu'une chambre annulaire en liaison hydraulique avec au moins un accumulateur hydropneumatique de la suspension, chaque vérin d'un premier essieu du véhicule étant équipé d'un correcteur de hauteur relié d'une part à une pompe à fluide par l'intermédiaire d'un accumulateur hydropneumatique et à un réservoir d'échappement ou bâche, et d'autre part à la chambre principale du vérin.

Toutefois, aucun des dispositifs de l'art antérieur ne permet d'obtenir une suspension, d'une part réagissant de façon classique lorsque les roues du véhicule sont soumises aux irrégularités normales de la route, et d'autre part adaptée à compenser les débattements ou déplacements verticaux des éléments de la suspension lorsque ceux-ci sont sollicités de façon durable en détente ou en compensation, de sorte que le véhicule conserve de façon quasi-constante sa stabilité et son assiette par rapport au profil moyen du sol, lors de prises de roulis en virage ou de tangage en accélération freinage.

Ainsi, l'invention a pour but de proposer un dispositif qui confère au véhicule une excellente tenue de route en évitant les prises d'angle qui entraînent, par ailleurs, des sensations désagréables pour les passagers.

A cet effet, l'invention a pour objet un dispositif de suspension hydropneumatique semi-active pour véhicule automobile, et du type comprenant un vérin hydraulique associé à chacune des roues et muni d'une chambre principale reliée par l'intermédiaire d'un amortisseur à un accumulateur hydropneumatique principal, ainsi qu'une chambre annulaire en liaison hydraulique avec au moins un accumulateur hydropneumatique de la suspension, chaque vérin d'un essieu avant étant équipé d'un correcteur de hauteur relié d'une part à une source de fluide sous pression par l'intermédiaire d'un accumulateur hydropneumatique de compensation et à un réservoir d'échappement ou bâche, et d'autre part à la chambre principale du vérin, caractérisé en ce que l'essieu arrière est équipé d'un seul correcteur de hauteur contrôlant au moins l'un des vérins de cet essieu, ledit correcteur de hauteur de l'essieu arrière étant alimenté par un accumulateur hydropneumatique de compensation et en ce que la chambre annulaire de chacun des vérins d'au moins un essieu est reliée à la chambre principale de l'autre vérin de ce même essieu en amont de l'amortisseur pour communiquer avec son accumulateur hydropneumatique principal.

Evidemment, on peut également prévoir que chaque vérin de l'essieu arrière soit équipé d'un correcteur de hauteur propre et que ce soit l'essieu avant qui soit équipé d'un correcteur unique.

Suivant une autre caractéristique de l'invention, la chambre annulaire de chacun des vérins d'au moins un essieu, préférentiellement l'essieu avant, est en liaison hydraulique avec l'accumulateur hydropneumatique principal de l'autre vérin de cet essieu.

On précisera également ici que la chambre annulaire de chacun des vérins d'au moins un essieu est reliée directement à l'accumulateur hydropneumatique de compensation de cet essieu.

Par ailleurs, l'un des vérins d'un essieu est équipé d'un correcteur de hauteur reliant selon la hauteur de la roue correspondante la chambre principale de ce vérin à l'accumulateur hydropneumatique de compensation de l'essieu ou au réservoir d'échappement, tandis que l'autre vérin de ce même essieu est muni d'un distributeur à tiroir commandé par les quatre vérins de la suspension, contrôlant le volume de fluide à l'intérieur de la chambre principale du vérin auquel le distributeur est associé.

Suivant encore une autre caractéristique, le tiroir du distributeur précité est relié aux quatre accumulateurs hydropneumatiques principaux des vérins de la suspension et en ce qu'il est apte à mettre en communication la chambre principale du vérin auquel il est associé avec l'accumulateur de compensation de l'essieu précité ou avec le réservoir d'échappement ou bâche, en fonction des pressions des quatre accumulateurs hydropneumatiques principaux précités.

En outre, le tiroir du distributeur comporte à chaque extrémité un axe épaulé ou étagé définissant d'une part, une chambre annulaire reliée hydrauliquement à l'un des accumulateurs hydropneumatiques principaux des vérins de l'autre essieu, et d'autre part une chambre extrême reliée à l'un des accumulateurs hydropneumatiques principaux des vérins de l'essieu précité, cet accumulateur étant diagonalement opposé à l'accumulateur de l'autre essieu.

L'invention est aussi caractérisée en ce que la chambre annulaire de chacun des vérins de l'essieu précité est reliée à l'accumulateur hydropneumatique de compensation de cet essieu ou a la chambre principale de l'autre vérin de ce même essieu.

De plus, les sections respectives des vérins de l'essieu précité et des vérins de l'autre essieu, ainsi que les sections du tiroir du distributeur sont choisies de telle sorte que la différence des forces verticales au sol des deux roues de l'essieu précité soit proportionnelle à la différences des forces verticales au sol des deux roues de l'autre essieu, le coefficient de proportionnalité étant égal à :

$$\frac{(2S - s).a}{(2S'-s')(A-a)} .$$

Suivant un mode de réalisation dans lequel l'essieu précité est muni d'un moyen de commande, du type à barre anti-roulis, qui actionne selon l'orientation de l'une de ses sections, de préférence médiane, le correcteur de hauteur de l'essieu précité qui est associé aux vérins de cet essieu, le dispositif est caractérisé en ce que la chambre annulaire de chacun des vérins de l'essieu précité est reliée à l'accumulateur hydropneumatique principal ou directement à la chambre principale du vérin de l'autre essieu qui lui est diagonalement opposé et éventuellement à la chambre annulaire de l'autre vérin dudit autre essieu.

Suivant encore un autre mode de réalisation, les dimensions des vérins des essieux avant et arrière sont choisies de telle sorte que la différence des forces verticales au sol des deux roues de l'essieu précité soit proportionnelle à la différence des forces verticales au sol des deux roues de l'autre essieu, le coefficient de proportionnalité $\underline{k}$ étant égal a :

$$\frac{2S - s}{S' - s'} .$$

D'autre part, chaque vérin de l'essieu précité est muni d'une deuxième chambre annulaire reliée à la première chambre annulaire de l'autre vérin de ce même essieu.

On notera ici que les chambres annulaires des vérins de l'essieu précité ont une section utile supérieure à la section utile de la chambre principale correspondante.

Suivant encore un autre mode de réalisation, les dimensions des vérins des essieux avant et arrière sont choisies de telle sorte que la différence des forces verticales au sol des deux roues de l'essieu précité soit proportionnelle à la différence des forces verticales au sol des deux roues de l'autre essieu, le coefficient de proportionnalité $\underline{k}$ étant égal à :

$$\frac{2S - s}{2 (S'-s')}$$

Dans le cas d'un dispositif où l'essieu précité est muni d'un moyen de commande, tel que barre anti-roulis, qui actionne selon l'orientation de l'une de ses sections de préférence médiane, le correcteur de hauteur de l'essieu précité qui est associé aux vérins de cet essieu, caractérisé en ce que le correcteur de hauteur précité est relié aux chambres annulaires des vérins, tandis que chacune des chambres principales de ces vérins est reliée à l'accumulateur hydropneumatique principal du vérin opposé de l'autre essieu.

Les dimensions des vérins des essieux avant et arrière sont choisies de telle sorte que la différence des forces verticales au sol des deux roues de l'essieu précité à correcteur unique soit proportionnelle à la différence des forces verticales au sol des deux roues de l'autre essieu, le coefficient de proportionnalité $\underline{k}$ étant égal à :

$$\frac{2S - s}{S'} .$$

On peut ainsi prévoir que chacune des chambres annulaires de l'essieu avant et/ou de l'essieu arrière est reliée à un accumulateur hydropneumatique additionnel supplémentaire.

L'invention est caractérisée en ce que les correcteurs de hauteur de la suspension sont munis d'électro-vannes (V) permettant de les connecter ou de les déconnecter des vérins auxquels ils sont associés.

D'autre part, les correcteurs de hauteur précités peuvent être équipés de valves d'isolement à tiroir commandées par la pression du système de freinage et/ou par la pression d'un dispositif d'assistance de direction hydraulique.

Mais d'autres avantages de l'invention apparaîtront mieux dans la description détaillée qui suit et se réfère aux dessins annexés, donnés uniquement à titre d'exemple, et dans lesquels :

La figure 1 est une vue très schématique et en perspective d'un véhicule comportant un dispositif de suspension, selon un premier mode de réalisation de cette invention ;

La figure 2 est une vue fragmentaire faite suivant le repère II de la figure 1, d'une partie du distributeur à tiroir montrant plus particulièrement l'agencement de l'une de ses extrémités ; et

Les figures 3 à 7 sont des vues similaires à la figure 1 et représentant d'autres modes de réalisation du dispositif de suspension conforme à l'invention.

En se reportant aux figures annexées, un dispositif de suspension hydropneumatique semi-active comporte des vérins 1a, 1b, 1c, 1d associés respectivement aux roues 2a avant droite, 2b avant gauche, 2c arrière droite et 2d arrière gauche.

Chacun des vérins (1a...1d) d'au moins un essieu, est constitué d'un cylindre (3a...3d) solidaire d'un bras support de roue (4a...4d) articulé. Dans chacun de ces cylindres (3a...3d) se translate un piston (5a...5d) disposé à l'extrémité d'une tige (6a...6d) montée fixement sur la caisse d'un véhicule, non représenté.

A l'autre extrémité de la tige (6a...6d) est disposé un accumulateur hydropneumatique principal (7a...7d) d'un type classique.

Chacun des vérins (1a...1d) est muni d'une chambre principale (8a...8d) reliée à l'accumulateur hydropneumatique principal (7a...7d) par l'intermédiaire d'un conduit (9a...9d), au travers d'un amortisseur (10a...10d).

Par ailleurs on remarquera que chacun des vérins (1a...1d) de la suspension est muni d'une chambre annulaire (11a...11d) définie par le cylindre (3a...3d) et par la tige (6a...6d).

Par conséquent, la chambre principale (8a...8d) de chacun des vérins d'au moins un essieu est disposée à la partie inférieure du cylindre (3a...3d), tandis que la chambre annulaire (11a...11d) est disposée à la partie supérieure de celui-ci.

De plus, chaque vérin 1a, 1b de l'essieu avant est équipé d'un correcteur de hauteur 12a, 12b commandé, par exemple, par le bras support de roue 4a, 4b correspondant, tandis que l'essieu arrière est équipé d'un correcteur de hauteur 13 contrôlant au moins un des vérins 1c, 1d de cet essieu.

Il va de soi que, selon les cas, on pourra prévoir que chaque vérin de l'essieu arrière soit équipé d'un correcteur propre, et que ce soit l'essieu avant qui soit équipé d'un seul correcteur. Toutefois, pour simplifier la description, le correcteur de hauteur unique sera dans les exemples illustrés prévu au niveau de l'essieu arrière.

Les correcteurs de hauteur de l'essieu avant 12a, 12b sont reliés respectivement par un conduit 14a, 14b à un accumulateur hydropneumatique de compensation 15a alimenté par une source de fluide sous pression 16 par l'intermédiaire d'un conduit 17a équipé d'un clapet anti-retour 18a.

En outre, ces correcteurs de hauteur peuvent débiter dans un réservoir d'échappement ou bâche 19 par des conduits respectifs 19a, 19b. D'autre part, les correcteurs de hauteur 12a, 12b de l'essieu avant sont respectivement reliés par un conduit 20a, 20b et par le conduit 9a, 9b, à la chambre principale 8a, 8b des vérins 1a, 1b. Le correcteur de hauteur 13 de l'essieu arrière est relié par un conduit 14d à un accumulateur hydropneumatique de compensation supplémentaire 15c, indépendant de l'accumulateur hydropneumatique de compensation 15a de l'essieu avant. Cet accumulateur supplémentaire 15c est alimenté par la source de fluide sous pression 16, par l'intermédiaire d'un conduit 17c équipé d'un clapet anti-retour 18c. Cette précaution n'est pas absolument nécessaire, les accumulateurs de compensation 15a et 15c pouvant être confondus en un seul.

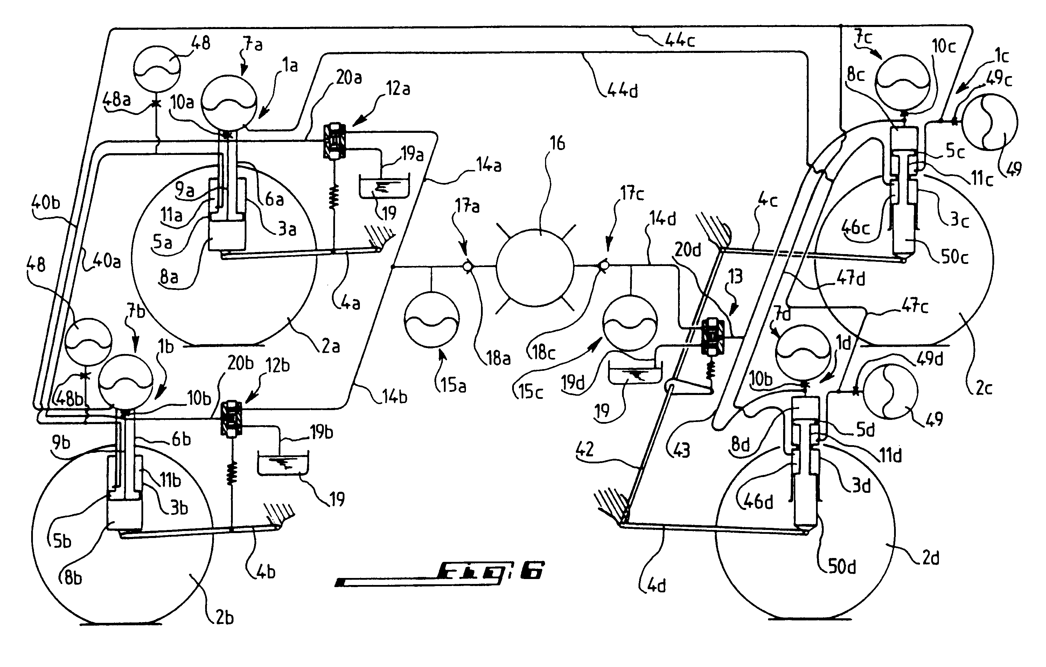

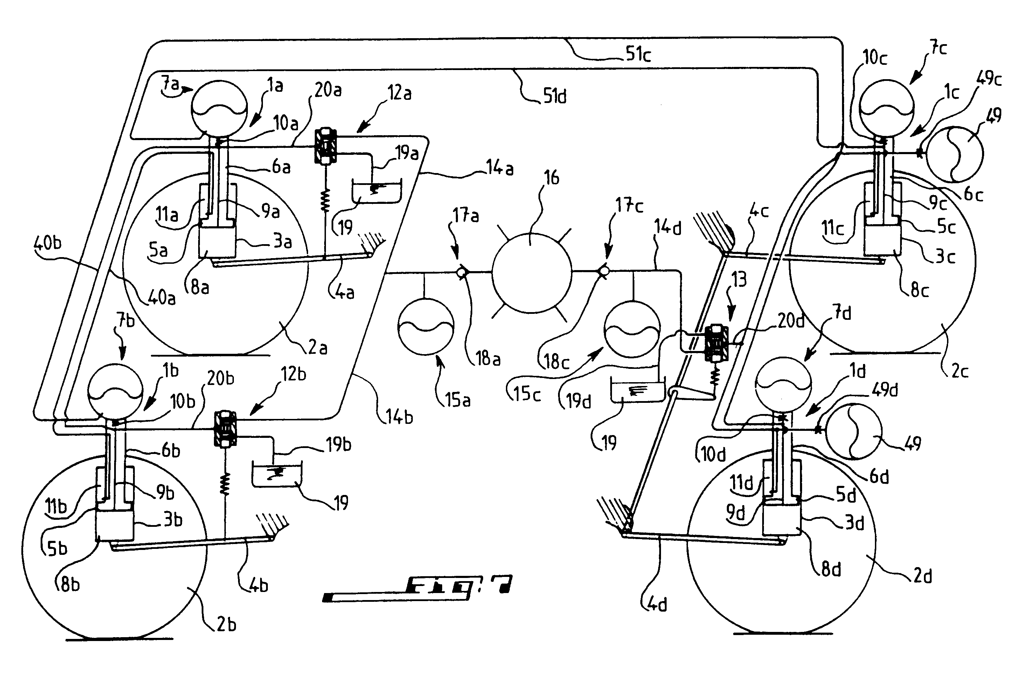

D'autre part le correcteur de hauteur 13 est relié par un conduit 20d à au moins une des chambres principales 8c, 8d. Sur la figure 7, le conduit 20d relie aussi le correcteur 13 et au moins une des chambres annulaires 11c, 11d des vérins de l'essieu arrière.

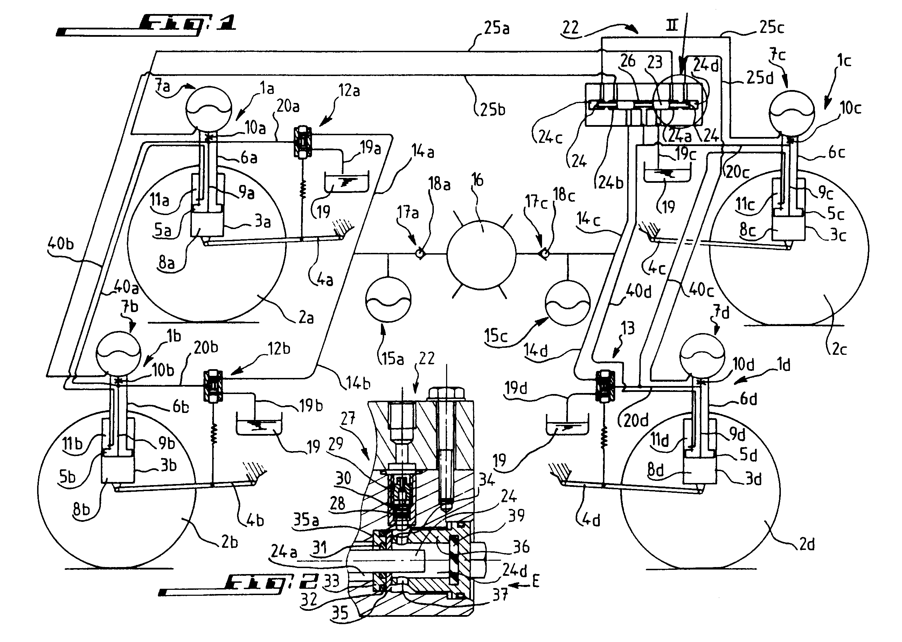

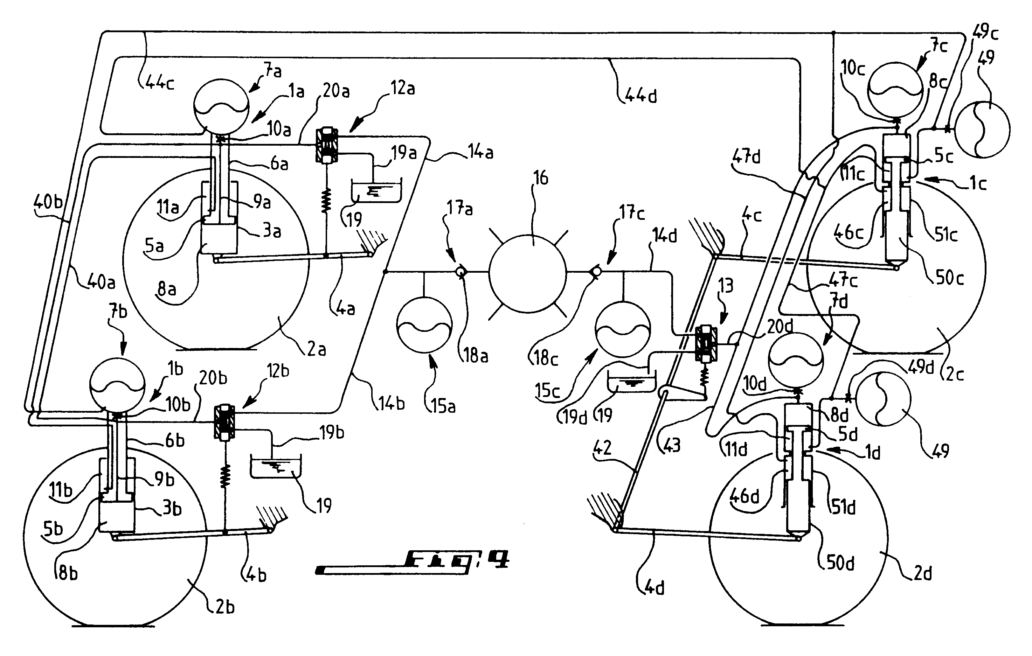

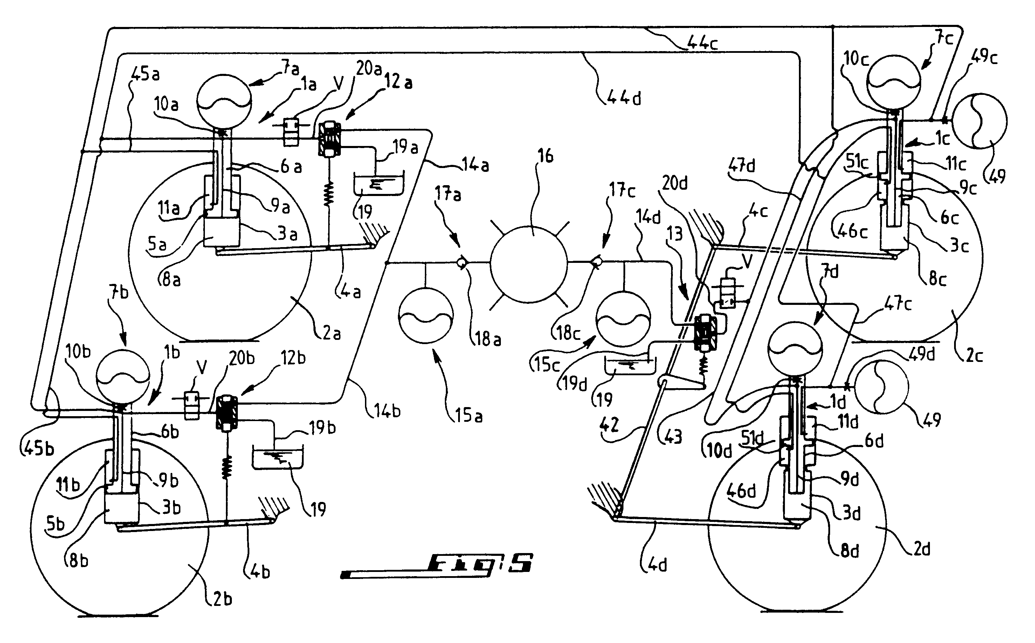

En se reportant notamment à la figure 1, qui représente un premier mode de réalisation du dispositif de suspension hydropneumatique conforme à l'invention, on remarque que les chambres annulaires 11a, 11b des vérins 1a, 1b de l'essieu avant, sont reliées respectivement par un conduit 40a, 40b à la chambre principale 8b, 8a du vérin opposé du même essieu, tandis que les chambres annulaires 11c, 11d des vérins 1c, 1d de l'essieu arrière sont reliées par un conduit 40c, 40d à la chambre principale 8d, 8c respectivement du vérin opposé du même essieu. Suivant l'exemple de la figure 5, la liaison croisée des chambres annulaires (11a, 11b) de l'essieu avant avec les chambres principales (8a...8d) du vérin opposé de ce même essieu est effectuée respectivement par des conduits 45a, 45b.

Par conséquent, la chambre annulaire (11a...11d) de chacun des vérins d'au moins un essieu est reliée directement à la chambre principale (8a...8d) du vérin de cet essieu.

Autrement dit, pour chaque essieu, la chambre annulaire d'un vérin est raccordée à la chambre principale de l'autre vérin de l'essieu, de sorte que cette chambre annulaire est reliée à un correcteur de hauteur et à l'accumulateur hydropneumatique (15a, 15c) de l'essieu correspondant.

Par ailleurs, le dispositif de suspension, selon ce premier mode de réalisation, comporte un distributeur à tiroir 22 équipant, par example, le vérin droit 1c de l'essieu arrière. Toutefois, comme précisé plus haut, il sera possible que le correcteur unique 13 et ce distributeur à tiroir équipent l'essieu avant d'un véhicule plutôt que l'essieu arrière.

Le tiroir 23 de ce distributeur 22 comporte à chaque extrémité un axe épaulé ou étagé 24 qui définit d'une part, une chambre annulaire 24a, 24b, et d'autre part une chambre extrême 24c, 24d.

Les chambres annulaires 24a, 24b sont reliées respectivement aux accumulateurs hydropneumatiques principaux 7a, 7b des vérins 1a, 1b de l'essieu avant, par des conduits 25a, 25b. Les chambres extrêmes 24c et 24d étant reliées respectivement aux accumulateurs hydropneumatiques principaux 7c, 7d des vérins 1c, 1d de l'essieu arrière par des conduits 25c, 25d.

Autrement dit, les chambres annulaires et extrêmes adjacentes définies par chaque axe épaulé ou étagé 24 sont respectivement reliées à des accumulateurs hydropneumatiques principaux avant 7a, 7b et arrière 7d, 7c diagonalement opposés.

Par ailleurs, le distributeur à tiroir 22 est relié d'une part, par un conduit 14c à l'accumulateur hydropneumatique de compensation de l'essieu arrière 15c, et d'autre part par un conduit 19c au réservoir d'échappement ou bâche 19, tandis que ce distributeur est relié par un conduit 20c et par le conduit 9c de la tige 6c à la chambre principale 8c du vérin 1c.

Ainsi, par l'intermédiaire de sa chambre annulaire de commande 26, le tiroir 23, en se translatant, est apte à mettre en communication la chambre principale 8c du vérin 1c auquel il est associé avec l'accumulateur hydropneumatique de compensation 15c de l'essieu arrière ou avec le réservoir 19, en fonction des pressions des quatre accumulateurs hydropneumatiques principaux (7a...7d) de la suspension.

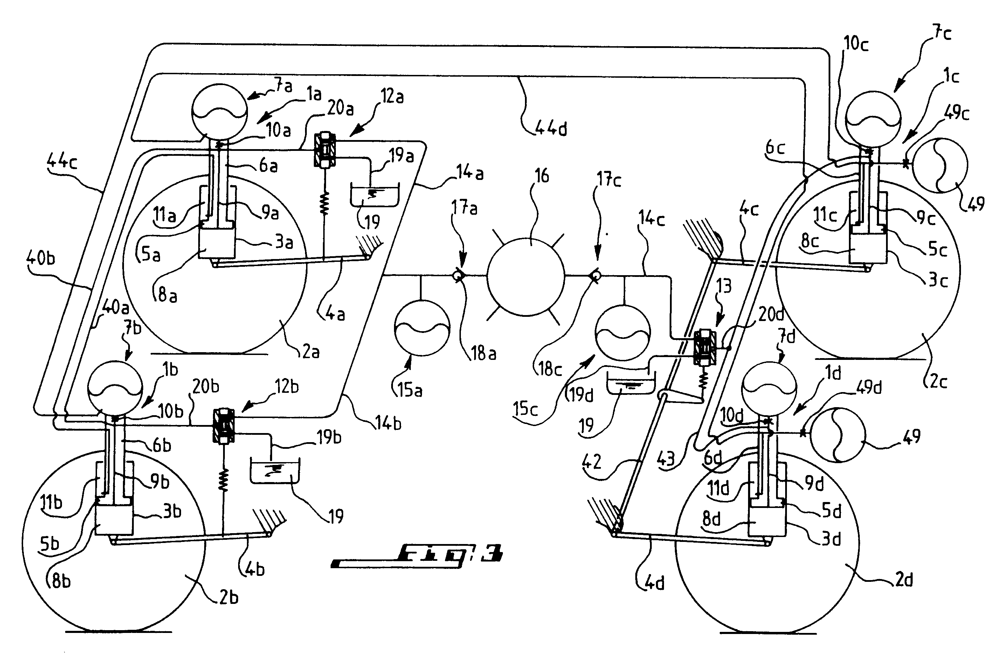

On précisera ici que l'arrivée des pressions dans le distributeur à tiroir 22 par les conduits (25a...25d), peut être freinée par un dispositif amortisseur 27, visible sur la figure 2, constitué par un empilage de rondelles perforées 28 maintenues par une pièce filetée 29 dans un écartement prédéterminé entre des entretoises 30.

D'autre part, l'étanchéité entre les chambres annulaires 24a, 24b et les chambres extrêmes 24d, 24c adjacentes est réalisée à chaque extrémité par deux joints toriques 31 et 32 maintenus entre deux cloisons 33 et 34.

Le joint torique 31 est en contact sur la périphérie de l'axe 24, tandis que le joint torique 32 est en contact sur la paroi de l'alésage 35 formée dans l'évidement E recevant ce système d'étanchéité.

La cloison 33 est maintenue en appui contre le fond 35a de l'alésage 35, tandis que la cloison 34 est maintenue par l'extrémité d'un organe d'obturation 36 fileté, qui coopère avec l'extrémité débouchante de l'évidement E.

Cet organe d'obturation 36 est évidé et comporte à son extrémité libre deux orifices 37 transversaux permettant la liaison hydraulique entre le dispositif d'amortissement 27 et la chambre extrême 24d, 24c, tandis que le dispositif d'amortissement voisin (non représenté) qui est connecté aux conduits 25a, 25b, débite directement dans les chambres annulaires respectives 25a, 25b.

On remarquera par ailleurs que le fond de l'organe d'obturation 36 est muni d'un élément élastique 39, par exemple en élastomère, absorbant les chocs reçus par l'extrémité de l'axe 24 lorsque celui-ci est déplacé de façon brutale.

Par conséquent, on a réalisé une suspension hydropneumatique semi-active à correcteurs de hauteur 12a, 12b, 13 indépendants pour au moins trois roues du véhicule et dont le volume du fluide à l'intérieur de la chambre principale 8c du quatrième vérin 1c est contrôlé par le distributeur à tiroir 22, lui-même commandé par les pressions des quatre vérins hydrauliques de la suspension.

Par ailleurs, on a réalisé une suspension permettant de contrôler la répartition des charges au sol et conférant au véhicule une excellente tenue de route. Ainsi, on détermine les sections respectives des vérins et du tiroir du distributeur de sorte que la différence des forces verticales au sol des deux roues de l'essieu arrière est proportionnelle à la différence des forces verticales au sol des deux roues de l'essieu avant.

Ainsi, on détermine un coefficient de proportionnalité k qui, dans ce premier mode de réalisation, est égal à :

$$\frac{(2S-s) \cdot a}{(2S'-s') \cdot (A-a)}$$

Dans cette relation, S est la section de la chambre principale 8a, 8b des vérins de l'essieu avant, S' la section de la chambre principale 8c, 8d des vérins de l'essieu arrière, A la section supérieure du tiroir 23, a la section de l'axe 24, et s étant la section des tiges 6a, 6b des vérins de l'essieu avant, s' étant la section des tiges 6c, 6d des vérins de l'essieu arrière.

Sur la figure 1, la chambre annulaire 11a du vérin 1a de l'essieu avant est, comme on l'a dit plus haut, reliée par un conduit 40a à la chambre principale 8b du vérin 1b, tandis que la chambre annulaire 11b du vérin 1b est reliée par un conduit 40b à la chambre principale 8a du vérin 1a.

De même, la chambre annulaire 11c du vérin 1c de l'essieu arrière est reliée par un conduit 40c à la chambre principale 8d du vérin 1d, tandis que la chambre annulaire 11d du vérin 1d est reliée par un conduit 40d à la chambre principale 8c du vérin 1c. Par conséquent, on remarquera que la chambre annulaire 11a, 11b, 11c, 11d de chacun des vérins d'un essieu est reliée à la chambre principale 8b, 8a, 8d, 8c de l'autre vérin de ce même essieu pour communiquer avec son accumulateur hydropneumatique principal 7b, 7a, 7d, 7c.

Ainsi, la chambre annulaire 11a, 11b, 11c, 11d de chacun des vérins d'au moins un essieu est en liaison hydraulique avec l'accumulateur hydropneumatique 7a, 7b, 7c, 7d principal de l'autre vérin de ce même essieu.

Sur la figure 3, on a représenté un deuxième mode de réalisation, dans lequel le correcteur de hauteur 13 de l'essieu arrière est actionné par l'une des sections d'un moyen de commande 42, du type barre anti-roulis, de préférence par sa section médiane.

Par ailleurs, dans ce mode de réalisation, le correcteur de hauteur 13 est relié aux deux vérins 1c, 1d de l'essieu arrière.

Plus particulièrement, le correcteur de hauteur est relié aux chambres principales 8c, 8d des vérins respectifs 1c, 1d par un conduit 43 connecté au conduit 20d.

De plus, les chambres annulaires 11c, 11d sont reliées respectivement aux accumulateurs hydropneumatiques principaux 7b, 7a des vérins 1b, 1a diagonalement opposés de l'essieu avant, par des conduits 44c et 44d.

On précisera que les conduits 44c et 44d peuvent être reliés respectivement aux chambres principales 8b, 8a des vérins 1b, 1a en étant connectés directement avec les conduits 9b, 9a, c'est-à-dire en aval des amortisseurs 10b, 10a.

De même, on notera que la chambre annulaire 11a, 11b de chacun des vérins de l'essieu avant est reliée hydrauliquement avec la chambre principale 8b, 8a du vérin opposé du même essieu.

Par conséquent, dans ces alternatives, la chambre annulaire 11c du vérin 1c est reliée hydrauliquement à l'accumulateur 7b, à la chambre 8b du vérin diagonalement opposé 1b et à la chambre annulaire 11a du vérin 1a, tandis que la chambre annulaire 11d du vérin 1d est reliée hydrauliquement à l'accumulateur hydropneumatique principal 7a, à la chambre principale 8a du vérin 1a diagonalement opposé et à la chambre annulaire 11b du vérin 1b. Ainsi, la chambre annulaire 11c, 11d de chacun des vérins de l'essieu arrière est reliée hydrauliquement à l'accumulateur hydropneumatique principal 7b, 7a du vérin diagonalement opposé de l'essieu avant et à la chambre annulaire 11a, 11b de l'autre vérin de ce même essieu.

On déterminera les sections des vérins dans le mode de réalisation de la figure 3, de sorte que la différence des forces verticales entre les deux roues de l'essieu arrière soit proportionnelle à la différence des forces verticales entre les deux autres roues le coefficient de proprotionnalité étant égal à :

$$\frac{2S - s}{S' - s'}$$

La figure 4 représente un troisième mode de réalisation dans lequel chaque vérin 1c, 1d de l'essieu arrière comporte une deuxième chambre annulaire 46c, 46d reliée à la première chambre annulaire 11d, 11c du vérin opposé du même essieu par un conduit 47c, 47d.

Les conduits 47c, 47d sont connectés respectivement aux conduits 44d, 44c de sorte que les deuxièmes chambres annulaires 46c et 46d soient respectivement en liaison hydraulique avec les accumulateurs hydropneumatiques principaux 7a, 7b des vérins du même côté de l'essieu avant, et par conséquent en liaison hydraulique avec les chambres annulaires 11b, 11a des vérins diagonalement opposés par l'intermédiaire des conduits 40b, 40a.

En se référant désormais à la figure 5 qui représente un quatrième mode de réalisation de l'invention, on remarque que les chambres annulaires 11c, 46c et 11d, 46d des vérins respectifs 1c, 1d de l'essieu arrière, ont une section utile supérieure à la section utile de la chambre principale 8c, 8d correspondante.

On remarquera ici que la deuxième chambre annulaire 46c du vérin 1c est d'une part, reliée à la première chambre annulaire 11d de l'autre vérin 1d de ce même essieu par l'intermédiaire du conduit 47c, et d'autre part à la chambre principale 8a du vérin opposé 1a de l'autre essieu par le conduit 44d, et à la chambre annulaire 11b du vérin diagonalement opposé 1b par le conduit 45b.

De même, la deuxième chambre annulaire 46d du vérin 1d est d'une part, reliée à la première chambre annulaire 11c de l'autre vérin du même essieu par le conduit 47c, et d'autre part à la chambre principale 8b du vérin opposé 1b de l'autre essieu par le conduit 44c, et à la chambre annulaire 11a du vérin diagonalement opposé 1a par le conduit 45a.

On notera que les conduits 44c et 44d sont connectés respectivement aux conduits 9b et 9a des vérins 1b et 1a de l'essieu avant, en aval des amortisseurs 10b et 10a.

Par ailleurs, les tiges 6c et 6d des vérins 1c et 1d ont été respectivement munies d'un piston 51c, 51d de forme annulaire, qui en se translatant définit les chambres annulaires 11c, 46c, et 11d, 46d ; la pression dans la chambre principale 8c, 8d agissant à l'extrémité de la tige 6c, 6d.

En outre, les conduits 20a, 20b et 20d des correcteurs de hauteur respectifs 12a, 12b et 13 peuvent être munis d'électro-vannes V permettant de connecter ou de déconnecter les correcteurs de hauteur précités des vérins auxquels ils sont associés. Ces électro-vannes permettent d'annuler l'action des correcteurs de hauteur en dehors des sollicitations en accélération-ferinage et virage ou d'affaiblir l'action de ces correcteurs de hauteur.

Cette disposition permet, par ailleurs, de diminuer la consommation d'énergie et de ne pas dégrader la qualité de la suspension en dehors des sollicitations précitées, en cas de roulage sur mauvaise route avec des correcteurs de hauteur trop rapides.

Ces électro-vannes peuvent être remplacées par des valves d'isolement à tiroir, non représentées, commandées par la pression du système de freinage et/ou par la pression du dispositif d'assistance de direction hydraulique.

Pour ce mode de réalisation précédent, on détermine les sections respectives des vérins de sorte que la différence des forces verticales entre les roues de l'essieu arrière soit proportionnelle à la différence des forces verticales entre les deux roues de l'autre essieu, le coefficient de proportionnalité $\underline{k}$ étant égal à :

$$\frac{2S - s}{2 (S'-s')}.$$

La figure 6 représente un cinquième mode de réalisation du dispositif selon l'invention, dans lequel on a équipé des conduits 40a, 40b reliant les chambres annulaires 11a, 11b de chacun des vérins 1a, 1b de l'essieu avant aux chambres principales respectives 8b, 8a, d'accumulateurs hydropneumatiques additionnels 48 équipés d'amortisseurs 48a, 48b.

Ainsi, cette disposition permet de limiter l'effet des pertes de charge dans les conduits et d'améliorer la qualité de la suspension du véhicule.

De même, on remarquera que pour la plupart des modes de réalisation décrits, on a équipé les chambres annulaires des vérins de l'essieu arrière d'accumulateurs hydropneumatiques additionnels respectivement équipés d'un amortisseur 49c, 49d qui permettent comme les accumulateurs hydropneumatiques 48 précités de limiter l'effet des pertes de charge.

En se référant à la figure 7 qui représente un sixième mode de réalisation du dispositif conforme à l'invention, on remarque que le correcteur de hauteur 13 de l'essieu arrière est relié aux chambres annulaires 11c, 11d des vérins de l'essieu arrière tandis que chacune des chambres principales 8c, 8d de ces vérins est, d'une part reliée à l'accumulateur hydropneumatique principal 7a, 7b du vérin opposé de l'essieu avant par des conduits 51c et 51d, et est d'autre part en liaison hydraulique avec la chambre annulaire 11b, 11a par le conduit 40b, 40a.

A cet effet, on a inversé, sur le correcteur de hauteur la position des conduits 14d et 19d reliés respectivement à la source de fluide sous pression et au réservoir d'échappement ou bâche.

Dans ce mode de réalisation, on détermine les sections respectives des vérins de sorte que, comme dans les modes de réalisation prcédents, la différence des forces verticales entre les roues d'un essieu soit proportionnelle à la différence des forces verticales des roues de l'autre essieu, le coefficient de proportionnalité $\underline{k}$ étant égal à :

$$\frac{2S - s}{S'}$$

Il est à noter que dans tous ces modes de réalisation, les correcteurs de hauteur, d'un type connu, tel que celui décrit dans le brevet français N° 1 210 581, sont dimensionnés pour permettre un débit instantané important tandis qu'ils sont réglés pour ne réagir que contre les mouvements relativement lents de mise en roulis en virage ou de mise en tangage en accélération-freinage, et non lorsque le véhicule rencontre des irrégularités normales de la route.

Il faut par ailleurs préciser que dans tous ces modes de réalisation, les vérins peuvent être inversés, comme représenté à titre d'exemple sur la figure 4.

Dans ce cas, on prévoit que les tiges 50c et 50d des vérins de l'essieu arrière ont été mécaniquement reliées au bras support de roue, tandis que les cylindres 51c et 51d qui leurs sont associés ont été fixés sur la caisse du véhicule.

**Revendications**

1. Dispositif de suspension hydropneumatique semi-active pour véhicule automobile, et du type comprenant un vérin hydraulique (1a...1d) associé à chacune des roues et muni d'une chambre principale (8a...8d) reliée par l'intermédiaire d'un amortisseur (10a...10d) à un accumulateur hydropneumatique principal (7a...7d) ainsi qu'une chambre annulaire (11a...11d) en liaison hydraulique avec au moins un accumulateur pneumatique (7a...7d ; 15a, 15c) de la suspension, chaque vérin (1a, 1b) d'un essieu avant étant équipé d'un correcteur de hauteur (12a, 12b) relié d'une part à une source de fluide sous pression (16) par l'intermédiaire d'un accumulateur hydropneumatique de compensation (15a) et à un réservoir d'échappement ou bâche (19), et d'autre part à la chambre principale du vérin (8a, 8b), caractérisé en ce que l'essieu arrière est équipé d'un seul correcteur de hauteur (13) contrôlant au moins l'un des vérins (1c, 1d) de cet essieu, ledit correcteur de hauteur (13) de l'essieu arrière étant alimenté par un accumulateur hydropneumatique de compensation (15c) et en ce que la chambre annulaire (11a, 11b, 11c, 11d) de chacun des vérins d'au moins un essieu est reliée à la chambre principale (8b, 8a, 8d, 8c) de l'autre vérin de ce même essieu en amont de l'amortisseur pour communiquer avec son accumulateur hydropneumatique principal (7a, 7b, 7c, 7d).

2. Dispositif de suspension hydropneumatique semi-active pour véhicule automobile, et du type comprenant un vérin hydraulique (1a...1d) associé à chacune des roues et muni d'une chambre principale (8a...8d) reliée par l'intermédiaire d'un amortisseur (10a...10d) à un accumulateur hydropneumatique principal (7a...7d) ainsi qu'une chambre annulaire (11a...11d) en liaison hydraulique avec au moins un accumulateur pneumatique (7a...7d ; 15a, 15c) de la suspension chaque vérin (1a, 1b) d'un essieu arrière étant équipé d'un correcteur de hauteur (12a, 12b) relié d'une part, à une source de fluide sous pression (16) par l'intermédiaire d'un accumulateur hydropneumatique de compensation (15a) et à un réservoir d'échappement ou bâche (19), et d'autre part à la chambre principale du vérin (8a, 8b), caractérisé en ce que l'essieu avant est équipé d'un seul correcteur de hauteur (13) contrôlant au moins l'un des vérins (1c, 1d) de cet essieu, ledit correcteur de hauteur (13) de l'essieu avant étant alimenté par un accumulateur hydropneumatique de compensation (15c) et en ce que la chambre annulaire (11a, 11b, 11c, 11d) de chacun des vérins d'au moins un essieu est reliée à la chambre principale (8b, 8a, 8d, 8c) de l'autre vérin de ce même essieu en amont de l'amortisseur pour communiquer avec son accumulateur hydropneumatique principal (7a, 7b, 7c, 7d).

3. Dispositif selon la revendication 1 ou 2, caractérisé en ce que la chambre annulaire (11a, 11b, 11c, 11d) de chacun des vérins d'au moins un essieu, est en liaison hydraulique avec l'accumulateur hydropneumatique principal (7b, 7a, 7d, 7c) de l'autre vérin de cet essieu.

4. Dispositif selon la revendication 1 ou 2, caractérisé en ce que la chambre annulaire (11a...11d) de chacun des vérins d'au moins un essieu est reliée directement à l'accumulateur hydropneumatique de compensation (15a, 15c) de cet essieu.

5. Dispositif selon l'une des revendications 1 à 4, caractérisé en ce que l'un des vérins (1c, 1d) d'un essieu est équipé d'un correcteur de hauteur (13) reliant selon la hauteur de la roue correspondante (2c, 2d) la chambre principale (8c, 8d) de ce vérin à l'accumulateur hydropneumatique de compensation de l'essieu (15c) ou au réservoir d'échappement (19), tandis que l'autre vérin (1c, 1d) de ce même essieu est muni d'un distributeur à tiroir (22) commandé par les quatre vérins (1a...1d) de la suspension, contrôlant le volume de fluide à l'intérieur de la chambre principale (8c, 8d) du vérin auquel le distributeur est associé.

6. Dispositif selon la revendication 5, caractérisé en ce que le tiroir (23) du distributeur (22) précité est relié aux quatre accumulateurs hydropneumatiques principaux (7a...7d) des vérins de la suspension et en ce qu'il est apte à mettre en communication la chambre principale (8c, 8d) du vérin auquel il est associé avec l'accumulateur de compensation de l'essieu précité (15c) ou avec le réservoir d'échappement ou bâche (19), en fonction des pressions des quatre accumulateurs (7a...7d) hydropneumatiques principaux précités.

7. Dispositif selon la revendication 5 ou 6, caractérisé en ce que le tiroir (23) du distributeur (22) comporte à chaque extrémité un axe épaulé ou étagé (24) définissant d'une part, une chambre annulaire (24a, 24b) reliée hydrauliquement à l'un des accumulateurs hydropneumatiques principaux (7a, 7b) des vérins de l'autre essieu et d'autre part une chambre extrême (24d, 24c) reliée à l'un des accumulateurs hydropneumatiques principaux (7d, 7c) des vérins de l'essieu précité, cet accumulateur est diagonalement opposé à l'accumulateur de l'autre essieu.

8. Dispositif selon l'une des revendications 5 à 7, caractérisé en ce que la chambre annulaire (11c, 11d) de chacun des vérins de l'essieu précité est reliée à l'accumulateur hydropneumatique de compensation (15c) de cet essieu ou à la chambre principale (8d, 8c) de l'autre vérin de ce même essieu.

9. Dispositif selon la revendication 8, caractérisé en ce que les sections respectives des vérins de l'essieu précité et de vérins de l'autre essieu, ainsi que les sections du tiroir (23) du distributeur (22) sont choisies de telle sorte que la différence des forces verticales au sol des deux roues de l'essieu précité soit proportionnelle à la différence des forces verticales au sol des deux roues de l'autre essieu, le coefficient de proportionnalité étant égal à :

$$\frac{(2S - s).a}{(2S'-s')\,(A-a)}$$

10. Dispositif selon l'une des revendications 1 à 4, dans lequel l'essieu précité est muni d'un moyen de commande (42), du type à barre anti-roulis, qui actionne selon l'orientation de l'une de ses sections, de préférence médiane, le correcteur de hauteur (13) de l'essieu précité qui est associé aux vérins (1c, 1d) de cet essieu, caractérisé en ce que la chambre annulaire (11c, 11d) de chacun des vérins de l'essieu précité est reliée à l'accumulateur hydropneumatique principal (7b, 7a) ou directement à la chambre principale (8b, 8a) du vérin de l'autre essieu qui lui est diagonalement opposé et éventuellement à la chambre annulaire (11a, 11b) de l'autre vérin dudit autre essieu.

11. Dispositif selon la revendication 10, caractérisé en ce que les dimensions des vérins des essieux avant et arrière sont choisies de telle sorte que la différence des forces verticales au sol des deux roues de l'essieu précité soit proportionnelle à la différence des forces verticales au sol des deux roues de l'autre essieu, le coefficient de proportionnalité $\underline{k}$ étant égal à :

$$\frac{2S - s}{S' - s'.}$$

12. Dispositif selon la revendication 10, caractérisé en ce que chaque vérin (1c, 1d) de l'essieu précité est muni d'une deuxième chambre annulaire (46c, 46d) reliée à la première chambre annulaire (11d, 11c) de l'autre (1d, 1c) vérin de ce même essieu.

13. Dispositif selon la revendication 12, caractérisé en ce que les chambres annulaires (11c, 46c ; 11d, 46d) des vérins (1c, 1d) de l'essieu précité ont une section utile supérieure à la section utile de la chambre principale correspondante (8c, 8d).

14. Dispositif selon la revendication 12 ou 13, caractérisé en ce que les dimensions des vérins des essieux avant et arrière sont choisies de telle sorte que la différence des forces verticales au sol des deux roues de l'essieu précité soit proportionnelle à la différence des forces verticales au sol des deux roues de l'autre essieu, le coefficient de proportionnalité $\underline{k}$ étant égal à :

$$\frac{2S - s}{2\,(S'-s')}$$

15. Dispositif selon l'une des revendications 1 à 4, dans lequel l'essieu précité est muni d'un moyen de commande (42), du type barre anti-roulis, qui actionne selon l'orientation de l'une de ses sections, de préférence médiane, le correcteur de hauteur (13) de l'essieu précité qui est associé aux vérins (1c, 1d) de cet essieu, caractérisé en ce que le correcteur de hauteur (13) précité est relié aux chambres annulaires (11c, 11d) des vérins, tandis que chacune des chambres principales (8c, 8d) de ces vérins est reliée à l'accumulateur hydropneumatique principale (7a, 7b) du vérin opposé de l'autre essieu.

**16.** Dispositif selon la revendication 15, caractérisé en ce que les dimensions des vérins des essieux avant et arrière sont choisies de telle sorte que la différence des forces verticales au sol des deux roues de l'essieu précité à correcteur unique soit proportionnelle à la différence des forces verticales au sol des deux roues de l'autre essieu, le coefficient de proportionnalité k̲ étant égal à :

$$\frac{2S - s}{S'}.$$

**17.** Dispositif selon l'une des revendications 1 à 16, caractérisé en ce que chacune des chambres annulaires (11a...11d) de l'essieu avant et/ou de l'essieu arrière est reliée à un accumulateur hydropneumatique additionnel supplémentaire (48, 49).

**18.** Dispositif selon l'une des revendications 1 à 17, caractérisé en ce que les correcteurs de hauteur (12a, 12b, 13) de la suspension sont munis d'électro-vannes (V) permettant de les connecter ou de les déconnecter des vérins auxquels ils sont associés.

**19.** Dispositif selon l'une des revendications 1 à 17, caractérisé en ce que les correcteurs de hauteur précités sont équipés de valves d'isolement à tiroir commandées par la pression du système de freinage et/ou par la pression d'un dispositif d'assistance de direction hydraulique.

**20.** Véhicule automobile équipé d'un dispositif selon l'une quelconque des revendications 1 à 19.

## Claims

**1.** Semi-active hydropneumatic suspension device for an automotive vehicle and of the type comprising a hydraulic jack (1a,...,1d) associated with each one of the wheels and provided with a main chamber (8a,...,8d) connected through the medium of a damper (10a,..., 10d) to a main hydropneumatic accumulator (7a,...,7d) as well as an annular chamber (11a,...,11d) in hydraulic connection with at least one pneumatic accumulator (7a,...,7d ; 15a, 15c) of the suspension, each jack (1a, 1b) of one front axle being fitted with a height corrector (12a, 12b) connected on the one hand to a source of fluid under pressure (16) through the medium of a hydropneumatic compensation accumulator (15a) and to an exhaust tank or vessel (19) and on the other hand to the main chamber of the jack (8a, 8b), characterized in that the rear axle is fitted with one single height corrector (13) controlling at least one of the jacks (1c, 1d) of this axle, the said height corrector (13) of the rear axle being fed by a hydropneumatic compensation accumulator (15c) and in that the annular chamber (11a, 11b, 11c, 11d) of each one of the jacks of at least one axle is connected to the main chamber (8b, 8a, 8d, 8c) of the other jack of this same axle upstream of the accumulator for communicating with its main hydropneumatic accumulator (7a, 7b, 7c, 7d).

**2.** Semi-active hydropneumatic suspension device for an automotive vehicle and of the type comprising a hydraulic jack (1a,..., 1d) associated with each one of the wheels and provided with a main chamber (8a,...,8d) connected through the medium of a damper (10a,...,10d) to a main hydropneumatic accumulator (7a,...,7d) as well as an annular chamber (11a,...,11d) in hydraulic connection with at least one pneumatic accumulator (7a,...,7d ; 15a, 15c) of the suspension, each jack (1a, 1b) of a rear axle being fitted with a height corrector (12a, 12b) connected on the one hand to a source of fluid under pressure (16) through the medium of a hydropneumatic compensation accumulator (15a) and to an exhaust tank or vessel (19) and on the other hand to the main chamber of the jack (8a, 8b), characterized in that the front axle is fitted with one single height corrector (13) controlling at least one of the jacks (1c, 1d) of this axle, the said height corrector (13) of the front axle being fed by a hydropneumatic compensation accumulator (15c) and in that the annular chamber (11a, 11b, 11c, 11d) of each one of the jacks of at least one axle is connected to the main chamber (8b, 8a, 8d, 8c) of the other jack of this same axle upstream of the accumulator for communicating with its main hydropneumatic accumulator (7a, 7b, 7c, 7d).

**3.** Device according to claim 1 or 2, characterized in that the annular chamber (11a, 11b, 11c, 11d) of each one of the jacks of at least one axle is in hydraulic connection with the main hydropneumatic accumulator (7b, 7a, 7d, 7c) of the other jack of this axle.

**4.** Device according to claim 1 or 2, characterized in that the annual chamber (11a,...,11d) of each one of the jacks of at least one axle is connected directly to the hydropneumatic compensation accumulator (15a, 15c) of this axle.

5. Device according to one of the claims 1 to 4, characterized in that one of the jacks (1c, 1d) of one axle is fitted with a height corrector (13) connecting according to the height of the corresponding wheel (2c, 2d), the main chamber (8c, 8d) of this jack to the hydropneumatic compensation accumulator (15c) of the axle or to the the exhaust tank (19), whereas the other jack (1c, 1d) of this same axle is provided with a spool distributor (22) operated by the four jacks (1a,...,1d) of the suspension, controlling the fluid volume inside of the main chamber (8c, 8d) of the jack with which the distributor is associated.

6. Device according to claim 5, characterized in that the spool (23) of the aforesaid distributor (22) is connected to the four main hydropneumatic accumulators (7a,...,7d) of the jacks of the suspension and in that it is apt to put in communication the main chamber (8c, 8b) of the jack with which it is associated with the compensation accumulator (15c) of the aforesaid axle or with the exhaust tank or vessel (19) in accordance with the pressures of the aforesaid four main hydropneumatic accumulators (7a,...,7d).

7. Device according to claim 5 or 6, characterized in that the spool (23) of the distributor (22) comprises at each end a shoulder or stepped shaft (24) defining on the one hand an annular chamber (24a, 24b) connected hydraulically to one of the main hydropneumatic accumulators (7a, 7b) of the jacks of the other axle and on the other hand an end chamber (24d, 24c) connected to one of the main hydropneumatic accumulators (7d, 7c) of the jacks of the aforesaid axle, this accumulator is diagonally opposite to the accumulator of the other axle.

8. Device according to one of the claims 5 to 7, characterized in that the annular chamber (11c, 11d) of each one of the jacks of the aforesaid axle is connected to the hydropneumatic compensation accumulator (15c) of this axle or to the main chamber (8d, 8c) of the other jack of this same axle.

9. Device according to claim 8, characterized in that the respective sections of the jacks of the aforesaid axle and of the jacks of the other axle as well as the sections of the spool (23) of the distributor (22) are so selected that the difference of the vertical forces at the ground of both wheels of the aforesaid axle be proportional to the difference of the vertical forces at the ground of both wheels of the other axle, the coefficient of proportionality being equal to :

$$\frac{(2S - s).a}{(2S'-s') (A-a)}$$

10. Device according to one of claims 1 to 4, wherein the aforesaid axle is provided with a control means (42) of the antirolling bar type which is actuating according to the orientation of one, preferably the middle one of its sections the height corrector (13) of the aforesaid axle which is associated with the jacks (1c, 1d) of this axle, characterized in that the annular chamber (11c, 11d) of each one of the jacks of the aforesaid axle is connected to the main hydropneumatic accumulator (7b, 7a) or directly to the main chamber (8b, 8a) of the jack of the other axle which is diagonally opposite thereto and possibly to the annular chamber (11a, 11b) of the other jack of the said other axle.

11. Device according to claim 10, characterized in that the dimensions of the jacks of the front and rear axles are chosen in such a manner that the difference of the vertical forces at the ground of both wheels of the aforesaid axle be proportional to the difference of the vertical forces at the ground of both wheels of the other axle, the coefficient of proportionality $\underline{k}$ being equal to :

$$\frac{2S - s}{S' - s'}$$

12. Device according to claim 10, characterized in that each jack (1c, 1d) of the aforesaid axle is provided with a second annular chamber (46c, 46d) connected to the first annular chamber (11d, 11c) of the other jack (1d, 1c) of this same axle.

13. Device according to claim 12, characterized in that the annular chambers (11c, 46c ; 11d, 46d) of the jacks (1c, 1d) of the aforesaid axle have a greater useful section than the useful section of the corresponding main chamber (8c, 8d).

14. Device according to claim 12 or 13, characterized in that the dimensions of the jacks of the front and rear axles are selected in such a manner that the difference of the vertical forces at the ground of both wheels of the aforesaid axle be proportional to the difference of the vertical forces at the ground of both wheels of the other axle, the coefficient of proportionality $\underline{k}$ being equal to :

$$\frac{2S- s}{2(S'-s')}$$

15. Device according to one of the claims 1 to 4, wherein the aforesaid axle is provided with a control means (42) of the antirolling bar type which actuates according to the orientation of one, preferably the middle one of its sections, the height corrector (13) of the aforesaid axle which is associated with the jacks (1c, 1d) of this axle, characterized in that the aforesaid height corrector (13) is connected to the annular chambers (11c, 11d) of the jacks, whereas each one of the main chambers (8c, 8d) of these jacks is connected to the main hydropneumatic accumulator (7a, 7b) of the jack opposite to the other axle.

16. Device according to claim 15, characterized in that the dimensions of the jacks of the front and rear axles are chosen in such a manner that the difference of the vertical forces at the ground of both wheels of the aforesaid axle with a single corrector be proportional to the difference of the vertical forces at the ground of both wheels of the other axle, the coefficient of proportionality k being equal to :

$$\frac{2S - s}{S'}.$$

17. Device according to one of the claims 1 to 16, characterized in that each one of the annular chambers (11a,...,11d) of the front axle and/or of the rear axle is connected to an additional supplemental hydropneumatic accumulator (48, 49).

18. Device according to one of the claims 1 to 17, characterized in that the height correctors (12a, 12b, 13) of the suspension are provided with electrovalves (V) allowing to connect them to or to disconnect them from the jacks with which they are associated.

19. Device according to one of the claims 1 to 17, characterized in that the aforesaid height correctors are fitted with isolating spool valves operated by the pressure of the braking system and/or by the pressure of a hydraulic steering assistance device.

20. Automotive vehicle fitted with a device according to any one of the claims 1 to 19.

**Patentansprüche**

1. Halbwirksame hydropneumatische Aufhängungsvorrichtung für ein Kraftfahrzeug und derjenigen Gattung mit einem, jedem der Räder zugeordneten und mit einer über einen Dämpfer (10a... 10d) mit einem hydropneumatischen Hauptakkumulator (7a...7d) verbundenen Hauptkammer versehenen Kraftzylinder (1a...1d) sowie einer mit wenigstens einem pneumatischen Akkumulator (7a,...7d; 15a, 15c) der Aufhängung in hydraulischer Verbindung stehenden ringförmigen Kammer (11a,...11d), wobei jeder Kraftzylinder (1a,1b) einer Vorderachse mit einem einerseits mit einer Druckmittelquelle (16) über einen hydropneumatischen Ausgleichsakkumulator (15a) und mit einem Entweichungsbehälter bzw. Gefäss (19) und andererseits mit der Haupkammer des Kraftzylinders (8a,8b) verbundenen Höhenentzerrer (12a,12b) ausgerüstet ist, dadurch gekennzeichnet, dass die Hinterachse mit einem einzigen, wenigstens einen der Kraftzylinder (1c,1d) dieser Achse kontrollierenden Höhenentzerrer (13) ausgerüstet ist, wobei der besagte Höhenentzerrer (13) der Hinterachse durch einen hydropneumatischen Ausgleichsakkumulator (15c) gespeist wird und dass die ringförmige Kammer (11,11b,11c,11d) jedes der Kraftzylinder von wenigstens einer Achse mit der Hauptkammer (8b,8a,8d,8c) des anderen Kraftzylinders dieser selben Achse stromaufwärts des Dämpfers verbunden ist, um mit ihrem hydropneumatischen Hauptakkumulator (7a,7b,7c,7d) in Verbindung zu stehen.

2. Halbwirksame hydropneumatische Aufhängungsvorrichtung für ein Kraftfahrzeug und derjenigen Gattung mit einem jedem der Räder zugeordneten und mit einer über einen Dämpfer (10a... 10d) mit einem hydropneumatischen Hauptakkumulator (7a...7d) verbundenen Hauptkammer (8a...8b) versehenen hydraulischen Kraftzylinder (1a...1d) sowie einer mit wenigstens einem pneumatischen Akkumulator (7a,...7d; 15a,15c) der Aufhängung in hydraulischer Verbindung stehenden ringförmigen Kammer (11a...11d), wobei jeder Kraftzylinder (1a,1b) einer Hinterachse mit einem, einerseits mit einer Druckmittelquelle (16) über einen hydropneumatischen Ausgleichsakkumulator (15a) und mit einem Entweichungsbehälter bzw. Gefäss (19) und andererseits mit der Hauptkammer des Kraftzylinders (8a,8b) verbundenen Höhenentzerrer (12a,12b) ausgerüstet ist, dadurch gekennzeichnet, dass die Vorderachse mit einem einzigen, wenigstens einen der Kraftzylinder (1c,1d) dieser Achse kontrollierenden Höhenentzerrer (13) ausgerüstet ist, wobei der besagte Höhenentzerrer (13) der Vorderachse durch einen hydropneumatischen Ausgleichsakkmulator (15c) gespeist wird und dass die ringförmige Kammer (11a,11b,11c,11d) jedes der Kraftzylinder von wenigstens einer Achse mit der Hauptkammer (8b,8a,8d,8c) des anderen Kraftzylinders dieser selben Achse stromaufwärts des Dämpfers verbunden ist, um mit ihrem hydropneumatischen Hauptakkumulator (7a,7b,7c,7d) in Verbindung zu stehen.

3. Vorrichtung nach Anspruch 1 oder 2, dadurch gekennzeichnet, dass die ringförmige Kammer (11a,11b,11c,11d) jedes der Kraftzylinder von wenigstens einer Achse mit dem hydropneumatischen Hauptakkumulator (7b,7a,7d,7c) des anderen Kraftzylinders dieser Achse in hydraulischer Verbindung steht.

4. Vorrichtung nach Anspruch 1 oder 2, dadurch gekennzeichnet, dass die ringförmige Kammer (11a,...11d) jedes der Kraftzylinder von wenigstens einer Achse mit dem hydropneumatischen Ausgleichsakkumulator (15a,15c) dieser Achse unmittelbar verbunden ist.

5. Vorrichtung nach einem der Ansprüche 1 bis 4, dadurch gekennzeichnet, dass einer der Kraftzylinder (1c,1d) einer Achse mit einem Höhenentzerrer (13) ausgerüstet ist, der die Hauptkammer (8c,8d) dieses Kraftzylinders mit dem hydropneumatischen Ausgleichsakkumulator der Achse (15c) oder mit dem Entweichungsbehälter (19) gemäss der Höhe des entsprechenden Rades (2c,2d) verbindet, während der andere Kraftzylinder (1c,1d) dieser selben Achse mit einem durch die vier Kraftzylinder (1a,...1d) der Aufhängung gesteuerten Verteiler mit Schieber (22) versehen ist, der das Volumen des fliessfähigen Mediums im Inneren der Hauptkammer (8c,8d) des Kraftzylinders, dem der Verteiler zugeordnet ist, kontrolliert.

6. Vorrichtung nach Anspruch 5, dadurch gekennzeichnet, dass der Schieber (23) des vorgenannten Verteilers (22) mit den vier hydropneumatischen Hauptakkumulatoren (7a,... 7d) der Kraftzylinder der Aufhängung verbunden ist und dass er fähig ist, die Hauptkammer (8c,8d) des Kraftzylinders, dem er zugeordnet ist, mit dem Ausgleichsakkumulator der vorgenannten Achse (15c) oder mit dem Entweichungsbehälter bzw. Gefäss (19) in Abhängigkeit der Drücke der vier vorgenannten hydropneumatischen Hauptakkumulatoren (7a,...7d) in Verbindung zu setzen.

7. Vorrichtung nach Anspruch 5 oder 6, dadurch gekennzeichnet, dass der Schieber (23) des Verteilers (22) an jedem Ende eine mit Schulter versehene bzw. abgesetzte Welle (24) aufweist, die einerseits eine mit einem der hydropneumatischen Hauptakkumulatoren (7a,7b) der Kraftzylinder der anderen Achse hydraulisch verbundene ringförmige Kammer (24a,24b) und andererseits eine mit einem der hydropneumatischen Hauptakkumulatoren (7d,7c) der Kraftzylinder der vorgenannten Achse verbundene Endkammer (24d,24c) abgrenzt, wobei dieser Akkumulator dem Akkumulator der anderen Achse diagonal entgegengesetzt ist.

8. Vorrichtung nach einem der Ansprüche 5 bis 7, dadurch gekennzeichnet, dass die ringförmige Kammer (11c,11d) jedes der Kraftzylinder der vorgenannten Achse mit dem hydropneumatischen Ausgleichsakkumulator (15c) dieser Achse oder mit der Hauptkammer (8d,8c) des anderen Kraftzylinders dieser selben Achse verbunden ist.

9. Vorrichtung nach Anspruch 8, dadurch gekennzeichnet, dass die jeweiligen Querschnitte der Kraftzylinder der vorgenannten Achse und der Kraftzylinder der anderen Achse, sowie die Querschnitte des Schiebers (23) des Verteilers (22) derart gewählt werden, dass der Unterschied der senkrechten Kräfte am Boden der beiden Räder der vorgenannten Achse proportional zu dem Unterschied der senkrechten Kräfte am Boden der beiden Räder der anderen Achse ist, wobei der Proportionalitätskoeffi-

zient gleich :

$$\frac{(2S - s).a}{(2S'-s')\ (A-a)}$$

ist.

10. Vorrichtung nach einem der Ansprüche 1 bis 4, bei welcher die vorgenannte Achse mit einem Steuermittel (42) der Wankbewegungsstabilisatorstangengattung versehen ist, das gemäss der Ausrichtung eines, vorzugsweise des mittleren seiner Querschnitte den Höhenentzerrer (13) der vorgenannten Achse, der den Kraftzylindern (1c,1d) dieser Achse zugeordnet ist, betätigt, dadurch gekennzeichnet, dass die ringförmige Kammer (11c,11d) jedes der Kraftzylinder der vorgenannten Achse mit dem hydropneumatischen Hauptakkumulator (7b,7a) oder unmittelbar mit der Hauptkammer (8b,8a) des Kraftzylinders der anderen Achse, der ihm diagonal entgegengesetzt ist und gegebenenfalls mit der ringförmigen Kammer (11a,11b) des anderen Kraftzylinders der besagten anderen Achse verbunden ist.

11. Vorrichtung nach Anspruch 10, dadurch gekennzeichnet, dass die Abmessungen der Kraftzylinder der Vorder- und Hinterachsen derart gewählt werden, dass der Unterschied der senkrechten Kräfte am Boden der beiden Räder der vorgenannten Achse zu dem Unterschied der senkrechten Kräfte am Boden der beiden Räder der anderen Achse proportional ist, wobei der Proportionalitätskoeffizient k gleich :

$$\frac{2S - s}{S' - s'}$$

ist.

12. Vorrichtung nach Anspruch 10, dadurch gekennzeichnet, dass jeder Kraftzylinder (1c,1d) der vorgenannten Achse mit einer zweiten, mit der ersten ringförmigen Kammer (11d,11c) des anderen Kraftzylinders (1d,1c) dieser selben Achse verbundenen Kammer (46c,46d) versehen ist.

13. Vorrichtung nach Anspruch 12, dadurch gekennzeichnet, dass die ringförmigen Kammern (11c, 46c;11d,46d) der Kraftzylinder (1c,1d) der vorgenannten Achse einen grösseren Nutzquerschnitt als der Nutzquerschnitt der entsprechenden Hauptkammer (8c,8d) haben.

14. Vorrichtung nach Anspruch 12 oder 13, dadurch gekennzeichnet, dass die Abmessungen der Kraftzylinder der Vorder- und Hinterachsen derart gewählt werden, dass der Unterschied der senkrechten Kräfte am Boden der beiden Räder der vorgenannten Achse zu dem Unterschied der senkrechten Kräfte am Boden der beiden Räder der anderen Achse proportional ist, wobei der Proportionalitätskoeffizient k gleich :

$$\frac{2S - s}{2\ (S'-s')}$$

ist.

15. Vorrichtung nach einem der Ansprüche 1 bis 4, bei welcher die vorgenannte Achse mit einem Steuermittel (42) der Wankbewegungsstabilisatorstangengattung versehen ist, das gemäss der Ausrichtung des einen, vorzugsweise des mittleren seiner Querschnitte, den Höhenentzerrer (13) der vorgenannten Achse, der den Kraftzylindern (1c,1d) dieser Achse zugeordnet ist, betätigt, dadurch gekennzeichnet, dass der vorgenannte Höhenentzerrer (13) mit den ringförmigen Kammern (11c,11d) der Kraftzylinder verbunden ist, während jede der Hauptkammern (8c,8d) dieser Kraftzylinder mit dem hydropneumatischen Hauptakkumulator (7a,7b) des entgegengesetzten Kraftzylinders der anderen Achse verbunden ist.

16. Vorrichtung nach Anspruch 15, dadurch gekennzeichnet, dass die Abmessungen der Kraftzylinder der Vorder- und Hinterachsen derart gewählt werden, dass der Unterschied der senkrechten Kräfte am Boden der beiden Räder der vorgenannten Achse mit Einzelentzerrer zu dem Unterschied der senkrechten Kräfte am Boden der beiden Räder der anderen Achse proportional ist, wobei der Proportionalitätskoeffizient k gleich :

$$\frac{2S - s}{S'}$$

14

ist.

17. Vorrichtung nach einem der Ansprüche 1 bis 16, dadurch gekennzeichnet, dass jede der ringförmigen Kammern (11a, ... 11d) der Vorderachse und/oder der Hinterachse mit einem zusätzlichen hydropneumatischen Ergänzungsakkumulator (48,49) verbunden ist.

18. Vorrichtung nach einem der Ansprüche 1 bis 17, dadurch gekennzeichnet, dass die Höhenentzerrer (12a,12b,13) mit Elektroventilen (V) versehen sind, die es gestatten, sie mit den Kraftzylindern, denen sie zugeordnet sind, zu verbinden oder von denselben zu trennen.

19. Vorrichtung nach einem der Ansprüche 1 bis 17, dadurch gekennzeichnet, dass die vorgenannten Höhenentzerrer mit, durch den Druck des Bremssystems und/oder durch den Druck einer Hydrolenkhilfevorrichtung gesteuerten Absperrventilen mit schieber ausgerüstet sind.

20. Mit einer Vorrichtung nach irgendeinem der Ansprüche 1 bis 19 ausgerüstetes Kraftfahrzeug.

Fig.1

Fig.2

Fig. 3

EP 0 328 840 B1

Fig. 1

Fig. 5

Fig. 6

Fig. 7

EP 0 328 840 B1